# EUROPEAN PATENT APPLICATION

(11) **EP 4 685 975 A1**
(43) Date of publication of application: **28.01.2026**
(21) Application number: 25191083.2
(22) Date of filing: 22.07.2025
(51) Int. Cl.: H01M 50/46, H01M 50/466, H01M 50/178, H01M 50/403

(54) **ELECTRODE ASSEMBLY AND SECONDARY BATTERY**

(30) Priority: 24.07.2024 KR 20240097804
(71) Applicant: SAMSUNG SDI CO., LTD., Yongin-si, Gyeonggi-do 17084 (KR)
(72) Inventor: LEE, Jeong Yeon, 16678 Suwon-si (KR)
(74) Representative: Maiwald GmbH

(57) **Abstract**

The present disclosure relates to an electrode assembly and a secondary battery, the electrode assembly and the secondary battery exhibiting improved safety. The present disclosure describes an electrode assembly including one or more first electrodes, one or more second electrodes having a greater area than the one or more first electrodes, and one or more separators formed in a pouch shape in which the second electrode is accommodated. The first electrode and the separator in which the second electrode is accommodated are stacked together.

## Description

### BACKGROUND

### 1. Field of the disclosure

The present disclosure relates to an electrode assembly, and to a secondary battery including the electrode assembly.

### 2. Discussion of Related Art

Unlike primary batteries that cannot typically be charged, secondary batteries can typically be charged and discharged. Low-capacity secondary batteries are typically used in small, portable electronic devices such as, e.g., smartphones, feature phones, laptop computers, digital cameras, camcorders, and the like, whereas high-capacity batteries are widely used as power sources for, e.g., driving motors in hybrid vehicles, electric vehicles, and the like, and as batteries for power storage. Secondary batteries include an electrode including a positive electrode and/or a negative electrode, an electrode assembly including the electrode, a case accommodating the electrode assembly, and an electrode terminal connected to the electrode assembly.

In secondary batteries, short circuits between electrodes may readily occur during the charging and discharging process. In particular, when a pressure increases, or deterioration of the electrode occurs due to over-charging or over-discharging, a short circuit may occur between the negative electrode and the positive electrode.

To reduce or prevent the short circuit, secondary batteries further include a separator located between the negative electrode and the positive electrode.

The information disclosed in the description of the related art of the present disclosure is only disclosed for improving the understanding of the background of the present disclosure, and thus may include information that does not constitute related or prior art.

### SUMMARY

The present disclosure describes an electrode assembly including a separator that reduces or prevents a short circuit, and/or a secondary battery including the electrode assembly.

For example, an example embodiment according to the present disclosure includes an electrode assembly including a pouch-shaped separator and/or a secondary battery including the electrode assembly.

For example, an example embodiment according to the present disclosure includes an electrode assembly including a pouch-shaped separator accommodating a negative electrode or a positive electrode and/or a secondary battery including the electrode assembly.

However, the technical problems to be solved by the present disclosure are not limited to the above-described issues, and other issues not mentioned can be clearly understood by those skilled in the art from the following description.

**In** order to address the above-described technical issues, as well as other issues, an electrode assembly according to an example embodiment of the present disclosure includes one or more first electrodes, one or more second electrodes having a greater area than the one or more first electrodes; and one or more separators formed in a pouch shape in which the one or more second electrodes are accommodated. The one or more first electrodes and the one or more separators in which the one or more second electrodes are accommodated are stacked together.

In order to address the above-described technical issues, a secondary battery according to an example embodiment of the present disclosure includes an electrode assembly, and a case accommodating the electrode assembly. The electrode assembly includes one or more first electrodes, one or more second electrodes having a greater area than the first electrode, and one or more separators formed in a pouch shape in which the one or more second electrodes are accommodated, and the one or more first electrodes and the one or more separators in which the one or more second electrodes are accommodated are stacked together.

According to the present disclosure, it is possible to reduce or prevent a short circuit from occurring in the electrode assembly and/or the secondary battery.

According to the present disclosure, it is possible to improve safety of the electrode assembly and/or the secondary battery.

However, the effects that can be achieved through the present disclosure are not limited to the above-described effects, and other technical effects not mentioned can be clearly understood by those skilled in the art from the following description.

### BRIEF DESCRIPTION OF THE DRAWINGS

The drawings attached to this specification illustrate example embodiments of the present disclosure, and along with the following detailed description of the disclosure, help understand the technical idea of the present disclosure. Therefore, the present disclosure should not be construed as limited to the matters described in the drawings, in which:
FIGS. 1 to 4 are cross-sectional views schematically illustrating a secondary battery according to an example embodiment of the present disclosure;
FIG. 5 is a view illustrating the components of an electrode assembly according to an example embodiment of the present disclosure;
FIG. 6 is a view illustrating a pouch-shaped separator according to an example embodiment of the present disclosure;
FIG. 7 is a view illustrating an example in which a second electrode is inserted into a pouch-shaped separator according to an example embodiment of the present disclosure;
FIG. 8 is an enlarged perspective view of the portion labeled "A" in FIG. 7;
FIG. 9 is a view illustrating an example in which a second electrode is inserted into a pouch-shaped separator according to an example embodiment of the present disclosure;
FIG. 10 is a view illustrating an example in which a second electrode is inserted into a pouch-shaped separator according to an example embodiment of the present disclosure;
FIG. 11 is a view illustrating an electrode assembly according to an example embodiment of the present disclosure; and
FIG. 12 is a view illustrating an electrode assembly according to an example embodiment of the present disclosure.

### DETAILED DESCRIPTION

Hereinafter, example embodiments of the present disclosure are described in detail. However, the embodiments are presented as an example, the present disclosure is not limited thereto, and the present disclosure is only defined by the scope of the claims described below.

Unless otherwise specified herein, when a part such as a layer, a membrane, an area, a plate, and the like, is said to be "on" another part, this configuration includes not only the case where the part is "directly on" another part, but also the case where still another part is present therebetween.

Unless otherwise specified in this specification, the singular may also include the plural. In addition, unless otherwise specified, "A or B" may mean "including A," "including B," or "including A and B."

In this specification, "a combination thereof" may mean a mixture of constituents, a laminate, a composite, a copolymer, an alloy, a blend, and a reaction product.

Unless otherwise defined herein, the particle size may be an average particle size. In addition, the particle size refers to the average particle size (D50), which is the diameter of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle diameter (D50) value may be obtained by performing data analysis, counting the number of particles in each particle size range, and then calculating the D50 value therefrom. Alternatively, the average particle diameter may be measured using a laser diffraction method. When measuring the average particle diameter by the laser diffraction method, for example, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz with at an output of 60 W.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

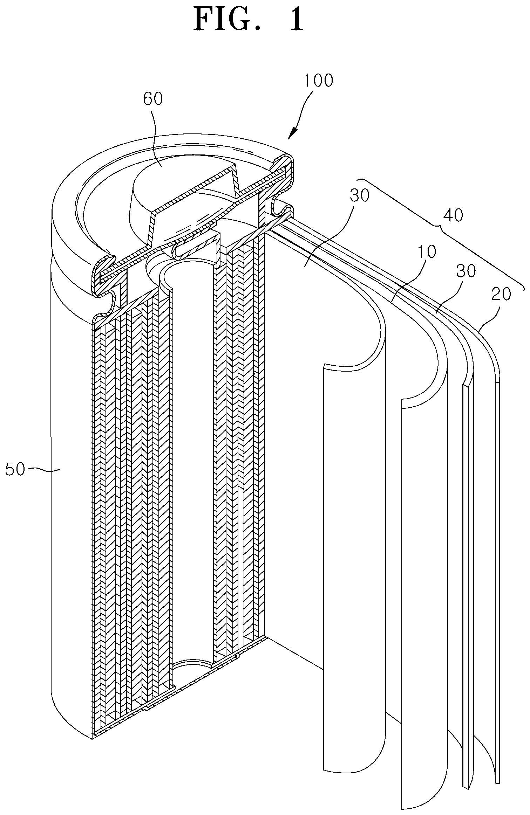

FIGS. 1 to 4 are cross-sectional views schematically illustrating a secondary battery according to an example embodiment of the present disclosure.

### Secondary battery 100

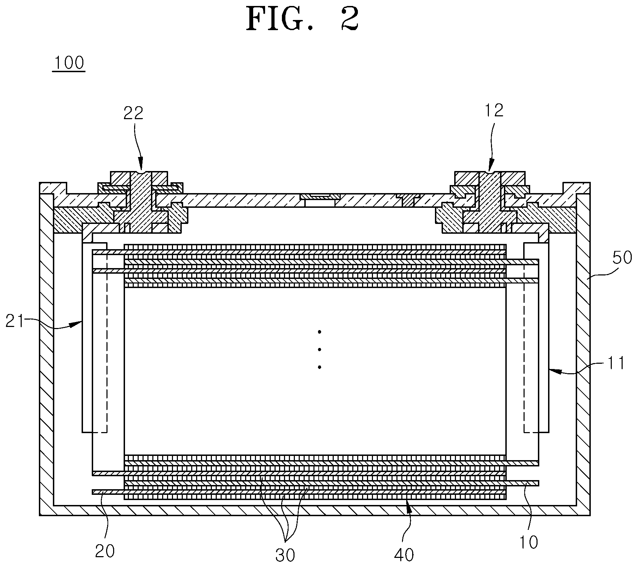

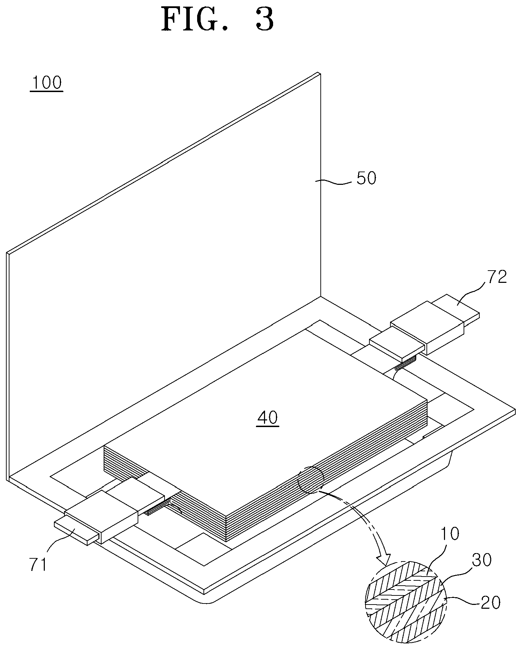

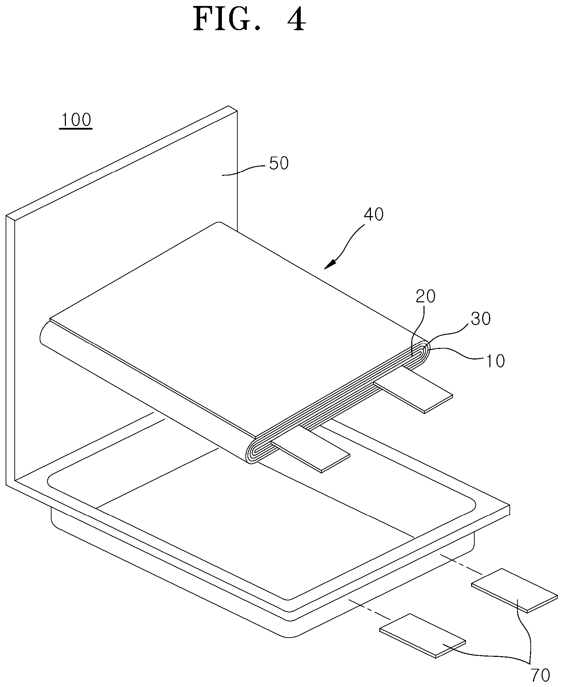

A secondary battery 100 may be classified into a cylindrical shape, a prismatic shape, a pouch shape, a coin shape, and the like, depending on its shape. FIGS. 1 to 4 are schematic views of secondary batteries according to an example embodiment of the present disclosure, where FIG. 1 is a cylindrical battery, FIG. 2 is a prismatic battery, and FIGS. 3 and 4 are pouch-type batteries. Referring to FIGS. 1 to 4, a secondary battery 100 may include an electrode assembly 40 with a separator 30 interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). The secondary battery 100 may include a sealing member 60 that seals the case 50 as shown in FIG. 1. In FIG. 2, the secondary battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the secondary battery 100 may include an electrode tab 70 illustrated in FIG. 4, or a positive electrode tab 71 and a negative electrode tab 72 illustrated in FIG. 3, the electrode tabs 70/71/72 forming an electrical passage for inducing the current generated in the electrode assembly 40 to the outside of the secondary battery 100.

### Positive electrode active material

A compound capable of reversible intercalation and deintercalation of lithium (lithiated intercalation compound) may be used as a positive electrode active material. For example, one or more types of composite oxides of lithium and a metal such as or including at least one of cobalt, manganese, nickel and a combination thereof, may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following chemical formulas may be used: LiₐA_{1-b}X_{b}O_{2-c}Dₑ (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

As an example, the positive electrode active material may be or include a high nickel-based positive electrode active material in which the nickel content is 80 mol% or more, 85 mol% or more, 90 mol% or more, 91 mol% or more, or 94 mol% or more and 99 mol% or less, based on 100 mol% of metals excluding lithium in the lithium transition metal composite oxide. Since the high nickel-based positive electrode active material may achieve high capacity, the high nickel-based positive electrode active material may be applied to a high-capacity and high-density secondary battery.

### Positive electrode 10

The positive electrode 10 for the secondary battery 100 may include a current collector and a positive electrode active material layer formed on the current collector. The positive electrode active material layer includes a positive electrode active material, and may further include a binder and/or a conductive material.

For example, the positive electrode may further include an additive that can constitute a sacrificial positive electrode.

The content of the positive electrode active material may be in a range of about 90 wt% to 99 wt% based on 100 wt% of the positive electrode active material layer, and the content of the binder and the conductive material may each be in a range of about 0.5 wt% to 5 wt%, based on 100 wt% of the positive electrode active material layer.

The binder adheres the positive electrode active material particles to each other, and adheres the positive electrode active material to a current collector. Representative examples of binders may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but is not limited thereto.

The conductive material imparts conductivity to the electrode, and any electrically conductive material may be used as long as the electrically conductive material does not cause adverse chemical changes in the battery, and is electronically conductive. Examples of conductive materials may include carbon-based materials such as at least one of natural graphite, artificial graphite, carbon black, acetylene black, ketjen black, carbon fibers, carbon nanofibers, and carbon nanotubes; metallic substances in the form of metal powder or metal fibers containing at least one of copper, nickel, aluminum, silver, and the like; conductive polymers such as polyphenylene derivatives; or a mixture thereof.

Al may be used as the current collector, but the present disclosure is not limited thereto.

### Negative electrode active material

The negative electrode active material includes a material capable of reversibly intercalating/deintercalating lithium ions, lithium metal, an alloy of lithium and a metal, a material capable of doing and dedoping lithium, or a transition metal oxide.

The material capable of reversibly intercalating/deintercalating lithium ions is a carbon-based negative electrode active material and may include, for example, crystalline carbon, amorphous carbon, or a combination thereof. Examples of the crystalline carbon may include graphite such as amorphous, platy, flaky, spherical, or fibrous natural graphite or artificial graphite, and examples of the amorphous carbon may include at least one of soft carbon, hard carbon, mesophase pitch carbide, calcined coke, and so on.

The alloy of lithium and a metal may be or include an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may be or include at least one of silicon, a silicon-carbon composite, SiOx (0<x<2), or an Si-Q alloy (where Q is or includes at least one of an alkali metal, an alkaline earth metal, a group 13 element, a group 14 element (excluding Si), a group 15 element, a group 16 element, a transition metal, a rare earth element, and a combination thereof). The Sn-based negative electrode active material may be or include at least one of Sn, SnO₂, an Sn-based alloy, or a combination thereof.

The silicon-carbon composite may be or include a composite of silicon and amorphous carbon. According to an example embodiment, the silicon-carbon composite may be in the form of silicon particles and amorphous carbon applied to the surface of the silicon particles. For example, the silicon-carbon composite may include a secondary particle (core) in which silicon primary particles are assembled, and an amorphous carbon coating layer (shell) which is located on the surface of the secondary particle. The amorphous carbon may also be located between the silicon primary particles, and the silicon primary particles may be, for example, coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or Sn-based negative electrode active material may be used in combination with a carbon-based negative electrode active material.

### Negative electrode 20

The negative electrode 20 for the secondary battery 100 may include a current collector and a negative electrode active material layer formed on the current collector. The negative electrode active material layer includes a negative electrode active material, and may further include a binder and/or a conductive material.

For example, the negative electrode active material layer may include about 90 wt% to about 99.5 wt% of the negative electrode active material, about 0.5 wt% to about 5 wt% of the binder, and about 0 wt% to about 5 wt% of the conductive material.

The binder adheres the negative electrode active material particles to each other, and adheres the negative electrode active material to a current collector well. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, the aqueous binder may further include a cellulose-based compound capable of imparting viscosity. As the cellulose-based compound, a mixture of one or more types of carboxymethyl cellulose, hydroxypropylmethyl cellulose, methyl cellulose, or alkali metal salts thereof may be used. As the alkali metal, at least one of Na, K, or Li may be used.

The dry binder is or includes a polymer material capable of being fiberized, and may be or include, for example, at least one of polytetrafluoroethylene, polyvinylidene fluoride, a polyvinylidene fluoride-hexafluoropropylene copolymer, polyethylene oxide, or a combination thereof.

The conductive material imparts conductivity to the electrode, and any conductive material may be used as long as the conductive material does not cause adverse chemical changes in the battery and is electronically conductive. Examples of the conductive material may include carbon-based materials such as at least one of natural graphite, artificial graphite, carbon black, acetylene black, ketjen black, carbon fibers, carbon nanofibers, carbon nanotubes, and the like, metallic substances in the form of metal powder or metal fibers containing at least one of copper, nickel, aluminum, silver, and the like, conductive polymers such as polyphenylene derivatives, or a mixture thereof.

The negative electrode current collector may be or include at least one of copper foil, nickel foil, stainless steel foil, titanium foil, nickel foam, copper foam, a polymer substrate coated with a conductive metal, and combinations thereof.

### Electrolyte (not shown)

The electrolyte for the secondary battery 100 includes a non-aqueous organic solvent and a lithium salt.

The non-aqueous organic solvent constitutes a medium through which ions involved in the electrochemical reaction of the battery can move.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include at least one of cyclohexanone, and the like. The alcohol-based solvent may include at least one of ethyl alcohol and isopropyl alcohol. The aprotic solvent may include at least one of nitriles such as R-CN (R is a C₂ to C₂₀ hydrocarbon group with a straight, branched, or ring structure, and may include a double bond, an aromatic ring, or an ether group), amides such as dimethylformamide, dioxolanes such as 1,3-dioxolane, 1,4-dioxolane, and the like, sulfolane, and the like.

The non-aqueous organic solvent may be used alone, or in combination of two or more types of solvents.

When the carbonate-based solvent is used, a cyclic carbonate and a chain carbonate may be mixed, and the cyclic carbonate and chain carbonate may be mixed in a volume ratio in a range of 1:1 to 1:9.

The lithium salt is dissolved in an organic solvent and acts as a source of lithium ions in the battery, enabling the operation of a secondary battery, and promotes the movement of lithium ions between the positive and negative electrodes. Representative examples of lithium salts may include at least one or more of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluoro(oxalato) borate (LiDFOB, lithium difluorobis(oxalato)phosphate (LiDFBOP), and lithium bis(oxalato)borate (LiBOB).

### Separator 30

A separator 30 may be present between the positive electrode 10 and the negative electrode 20 depending on the type of secondary battery 100. As the separator 30, at least one of polyethylene, polypropylene, polyvinylidene fluoride, or a multilayer film with two or more layers thereof may be used, and mixed multilayer films such as a polyethylene/polypropylene 2-layer separator, a polyethylene/polypropylene/polyethylene 3-layer separator, a polypropylene/polyethylene/polypropylene 3-layer separator, and the like, may also be used.

The separator 30 may include a porous substrate and a coating layer including an organic material, an inorganic material, or a combination thereof located on one or both sides of the porous substrate.

The porous substrate may be or include a polymer membrane formed of or including one polymer including at least one of polyolefins such as polyethylene, polypropylene, and the like, polyesters such as polyethylene terephthalate, polybutylene terephthalate, and the like, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon(polytetrafluoroethylene), or a copolymer or mixture of two or more thereof.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto.

The organic material and the inorganic material may be present as a mixture in one coating layer, or in a form in which a coating layer including an organic material and a coating layer including an inorganic material are stacked together.

As described above, the secondary battery 100 according to an example embodiment of the present disclosure includes an electrode assembly 40 and a case 50 in which the electrode assembly 40 is accommodated. Hereinafter, the electrode assembly 40 included in the secondary battery 100 is described.

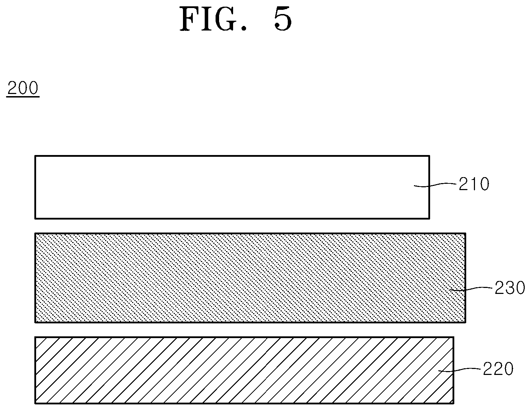

FIG. 5 is a view illustrating the components of the electrode assembly according to an example embodiment of the present disclosure.

In FIG. 5, 200 includes the electrode assembly 40 described in FIGS. 1 to 4.

The electrode assembly 200 according to an example embodiment of the present disclosure includes a first electrode 210, a second electrode 220, and a separator 230.

For example, the electrode assembly 200 includes one or more first electrodes 210, one or more second electrodes 220 having a greater area than the first electrode 210, and one or more separators 230 formed in a pouch shape in which the second electrode 220 is accommodated, and the first electrode 210 and the separator 230 in which the second electrode 220 is accommodated are stacked together.

The first electrode 210 includes, for example, a positive electrode (such as the positive electrode 10 described in FIGS. 1 to 4), and the second electrode 220 includes, for example, a negative electrode (such as the negative electrode 20 described in FIGS. 1 to 4). However, the first electrode 210 and the second electrode 220 are not limited thereto, and the first electrode 210 may include, for example, a negative electrode, and the second electrode 220 may include, for example, a positive electrode. Hereinafter, for convenience of explanation, the case where the first electrode 210 includes a positive electrode and the second electrode 220 includes a negative electrode is described as an example below.

The first electrode 210 includes a first electrode plate 211 and a first electrode tab 212 having one side joined to the first electrode plate 211 and the other side extending outside the first electrode plate 211.

The first electrode plate 211 includes a first substrate and a first coating layer applied on at least a portion of at least one side of the first substrate.

For example, the first substrate includes a current collector of the positive electrode 10 described in FIGS. 1 to 4.

The first substrate may collect the active material included in the first coating layer. In addition, the first substrate may maintain the shape of the first electrode plate 211.

When the first electrode 210 is a positive electrode, the first substrate is a positive electrode current collector. In this case, the first substrate may include, for example, at least one of stainless steel, aluminum, nickel, titanium, calcined carbon, or aluminum or stainless steel which surface is treated with at least one of carbon, nickel, titanium, silver, and the like.

For example, the first coating layer includes the active material layer of the positive electrode 10 described in FIGS. 1 to 4. The first coating layer may include an active material. When the first electrode 210 is a positive electrode, the active material included in the first coating layer may include, for example, lithium (Li). The first coating layer may further include, for example, a conductive material and/or a binder.

The first coating layer may be provided on one side of the first substrate, or may be provided on both sides of the first substrate. The first coating layer may be provided on a portion of the first substrate.

For example, the first coating layer is formed by applying a slurry including an active material onto the first substrate. Alternatively, the first coating layer may be formed by, for example, attaching a free-standing film including an active material to the first substrate.

The area of the first electrode plate 211 where the first coating layer is located on the first substrate may be referred to as a first coated portion. The area of the first electrode plate 211 where the first coating layer is not located on the first substrate and the first substrate is exposed to the outside may be referred to as a first uncoated portion.

The first electrode tab 212 constitutes a passage through which the first electrode plate 211 may be electrically connected to the outside. For example, the first electrode tab 212 is formed by attaching a structure including a conductive material to an uncoated portion. In this case, one side of the first electrode tab 212 may be joined to the uncoated portion and the other side of the first electrode tab 212 may extend outside the uncoated portion. Alternatively, for example, the uncoated portion may be extended to form the first electrode tab 212. In this case, the first electrode tab 212 may be integrated with the first electrode plate 211.

The second electrode 220 includes a second electrode plate 221 and a second electrode tab 222 having one side joined to the second electrode plate 221 and the other side extending outside the second electrode plate 221.

The second electrode plate 221 includes a second substrate and a second coating layer applied on at least a portion of at least one side of the second substrate.

For example, the second substrate includes a current collector of the negative electrode 20 described in FIGS. 1 to 4.

The second substrate may collect the active material included in the second coating layer. In addition, the second substrate may maintain the shape of the second electrode plate 221.

When the second electrode 220 is a negative electrode, the second substrate is a negative electrode current collector. In this case, the second substrate may include, for example, at least one of copper, stainless steel, aluminum, nickel, titanium, calcined carbon, copper or stainless steel which surface is treated with at least one of carbon, nickel, titanium, silver, and an aluminum-cadmium alloy.

For example, the second coating layer includes the active material layer of the negative electrode 20 described in FIGS. 1 to 4. The second coating layer may include an active material. When the second electrode 220 is a negative electrode, the active material included in the second coating layer may include, for example, at least one of silicon (Si), carbon (C), carbon nanotubes (CNTs), and a combination thereof. The second coating layer may further include, for example, a conductive material and/or a binder.

The second coating layer may be provided on one side of the second substrate, or may be provided on both sides of the second substrate. The second coating layer may be provided on a portion of the second substrate.

For example, the second coating layer is formed by applying a slurry including an active material onto the second substrate. Alternatively, the second coating layer may be formed by, for example, attaching a free-standing film including an active material to the second substrate.

The area of the second electrode plate 221 where the second coating layer is located on the second substrate may be referred to as a second coated portion. The area of the second electrode plate 221 where the second coating layer is not located on the second substrate, and the second substrate is exposed to the outside, may be referred to as a second uncoated portion.

The second electrode tab 222 constitutes a passage through which the second electrode plate 221 may be electrically connected to the outside. For example, the second electrode tab 222 is formed by attaching a structure including a conductive material to an uncoated portion. In this case, one side of the second electrode tab 222 may be j oined to the uncoated portion, and the other side of the second electrode tab 222 may extend outside the uncoated portion. Alternatively, for example, the uncoated portion may be extended to form the second electrode tab 222. In this case, the second electrode tab 222 may be integrated with the second electrode plate 221.

The second electrode 220 may be larger than the first electrode 210. For example, the second electrode 220 may have a larger area than the first electrode 210. For example, as shown in FIG. 5, when looking at the wide surface of each electrode 210 and 220, the second electrode 220 may be wider than the first electrode 210.

A separator 230 may be located between the first electrode 210 and the second electrode 220. For example, the separator 230 may reduce or prevent a short circuit from occurring between the first electrode 210 and the second electrode 220. In addition, the separator 230 may hold an electrolyte accommodated in the case 50 together with the electrode assembly 200. The separator 230 may freely move lithium ions.

As shown in FIG. 5, the separator 230 may be larger than the first electrode 210 and the second electrode 220. For example, the separator 230 may have a larger area than the first electrode 210 and the second electrode 220. In this way, the separator 230 may be larger than the first electrode 210 and the second electrode 220, thereby reducing or preventing a short circuit from occurring between the first electrode 210 and the second electrode 220.

As the secondary battery 100 is repeatedly charged and discharged, the separator 230 may shrink. Alternatively, as the charging cycle of the secondary battery 100 increases, the electrode assembly 200 may deteriorate. In this case, the separator 230 may not completely block the electrical connection between the first electrode 210 and the second electrode 220, and/or the first electrode 210 and the second electrode 220 may be electrically connected. Consequently, the safety of the secondary battery 100 may be reduced.

Accordingly, hereinafter, a method of insulating the first electrode 210 with the second electrode 220 and further improving the safety of the secondary battery 100 is described in detail below.

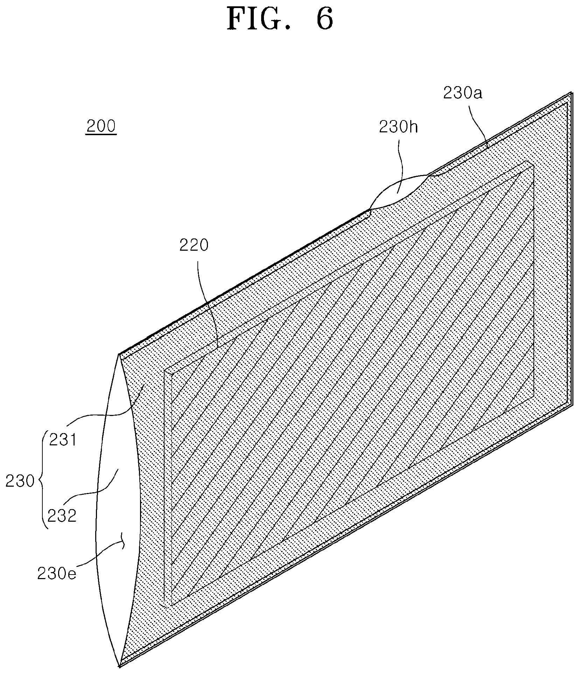

FIG. 6 is a view illustrating a pouch-shaped separator according to an example embodiment of the present disclosure.

As described in FIG. 5, the electrode assembly 200 according to an example embodiment of the present disclosure includes a pouch-shaped separator 230 accommodating a second electrode 220.

The separator 230 has a space that may accommodate electrodes (such as the first electrode 210 and the second electrode 220).

For example, the separator 230 may be formed in a pouch shape that may accommodate the first electrode 210 or the second electrode 220. For example, the separator 230 may accommodate the first electrode 210. For example, the separator 230 may accommodate the second electrode 220.

For example, the separator 230 may be formed in a pouch shape that may accommodate the first electrode 210 and the second electrode 220. For example, the separator 230 may include a first pouch in which the first electrode 210 is accommodated, and a second pouch in which the second electrode 220 is accommodated. The first pouch and the second pouch may be at least partially connected, or may be adjacent to each other without being connected.

For example, the separator 230 may accommodate one of the first electrode 210 and the second electrode 220, which is the electrode with a larger area than the first electrode 210. For example, the separator 230 may accommodate the second electrode 220. Thus, the separator 230 according to an example embodiment of the present disclosure may reduce or prevent an electrode with a larger area from coming into contact with the other electrode.

Hereinafter, for convenience of explanation, an example in which the second electrode 220 is accommodated in the separator 230 is described, but as described above, an example embodiment of the present disclosure is not limited thereto.

The separator 230 includes a first separator 231 forming one side of the pouch shape; and a second separator 232 which edges are joined to the first separator 231 to form another side of the pouch shape.

For example, the separator 230 includes the first separator 231 and the second separator 232 that form both sides of a pouch shape. For example, the first separator 231 and the second separator 232 may have the same size and/or the same shape. The first separator 231 and the second separator 232 may face each other.

The separator 230 includes a joined portion 230a formed by joining the edges of the first separator 231 and the edges of the second separator 232. For example, the joined portion 230a may be formed by heat-sealing the edges of the first separator 231 and the second separator 232 to each other. However, the method of forming the joined portion 230a is not limited thereto, and for example, the joined portion 230a may be physically joined by attaching each of the edges with tape.

For example, as shown in FIG. 6, the first separator 231 and the second separator 232 may be formed as a polygon-shaped film. For example, the first separator 231 and the second separator 232 may correspond to the shape of the second electrode 220. For example, the first separator 231 and the second separator 232 may be formed as a quadrangular film. However, the shapes of the first separator 231 and the second separator 232 are not limited thereto, and the first separator 231 and/or the second separator 232 may have any shape regardless of the shape of the second electrode 220 as long as the areas of the first separator 231 and the second separator 232 are larger than the area of the second electrode 220.

For example, as shown in FIG. 6, the joined portion 230a may be formed by joining three edges of the first separator 231 to three edges of the second separator 232. One edge that is not joined forms an entrance 230e in the pouch-shaped separator 230.

The entrance 230e constitutes a passage through which the second electrode 220 is able to be inserted into the pouch-shaped separator 230. Thus, the entrance 230e may be formed on a portion of one edge, or may be formed on more than one edge as long as the entrance is formed in a size that allows the second electrode 220 to pass through. **In** addition, even when the pouch-shaped separator 230 has a different shape than a quadrangular shape, such as a circular shape, the entrance 230e may have any size and/or shape such that the second electrode 220 can pass through the entrance 230e. Hereinafter, for convenience of explanation, the case where the pouch-shaped separator 230 has a quadrangular shape is described as an example.

Through this structure, the separator 230 may be formed in a pouch shape to accommodate the second electrode 220.

The first separator 231 and the second separator 232 may include the same material, and thus the separator 230 may improve manufacturing efficiency.

Alternatively, the first separator 231 and the second separator 232 may include different materials.

Alternatively, the first separator 231 and the second separator 232 may include the same material and have different coating layers on the outer surfaces thereof.

For example, the electrode assembly 200 may be damaged when a charge/discharge test is performed and/or an external impact is received. For example, the first electrode 210, the second electrode 220, and/or the separator 230 may be damaged. As a result, not only the charging and discharging efficiency of the electrode assembly 200 is reduced, but also safety-related problems may be caused.

To address these issues, for example, at least a portion of the surfaces of the first separator 231 and the second separator 232 may be coated with ceramic materials. As a result, the separator 230 may improve the durability of the electrode assembly 200, and of the secondary battery 100 including the electrode assembly 200.

The ceramic materials applied on at least a portion of the surfaces of the first separator 231 and the second separator 232 may be the same or different.

For example, the first electrode 210 and/or the second electrode 220 may expand in volume when repeatedly charged and discharged. For example, when the second electrode 220 includes silicon (Si), the second electrode 220 may expand in volume as charging/discharging cycles progress due to the dissolution of silicon.

To address this issue, for example, at least a portion of the surfaces of the first separator 231 and the second separator 232 may be coated with conductive polymers.

The conductive polymers applied on at least a portion of the surfaces of the first separator 231 and the second separator 232 may be the same, or may be different.

The conductive polymer is or includes a conductive polymer that conducts electricity and includes, for example, an organic polymer. For example, the conductive polymer may have electrical conductivity like metals, or semiconductor-like properties.

For example, the conductive polymer may include at least one of polythiophene-based conductive polymers, polypyrrole, polyphenylene, polyaniline, polyacetylene, polysulfurnitride, and a combination of at least two thereof.

The polythiophene-based conductive polymers may include, for example, at least one of poly 3-hexyl thiophene (P3HT), polyethylenedioxythiophene (PEDOT), polyethylenedioxythiophene/polycellulose sulfonate (PEDOT/PCS), and the like.

As a result, the separator 230 may improve the conductivity of the electrode assembly 200, and of the secondary battery 100 including the electrode assembly 200.

For example, at least a portion of the surface of the first separator 231 may be coated with a ceramic material, and at least a portion of the surface of the second separator 232 may be coated with a conductive polymer. Alternatively, for example, at least a portion of the surface of the first separator 231 may be coated with a conductive polymer, and at least a portion of the surface of the second separator 232 may be coated with a ceramic material. As a result, the separator 230 may improve the durability and/or the conductivity of the electrode assembly 200, and of the secondary battery 100 including the electrode assembly 200.

As such, the separator 230 may provide various applicable methods depending on the performance required for the electrode assembly 200 and/or the secondary battery 100.

One side of the first separator 231 may be in contact with the first electrode 210, and the other side of the first separator 231 may be in contact with the second electrode 220. On the other hand, the second separator 232 may be in contact with only the second electrode 220. The first separator 231 and the second separator 232 each include different materials or coating layers depending on the electrodes in contact therewith, and thus the efficiency of the electrodes in contact with them may be improved or maximized.

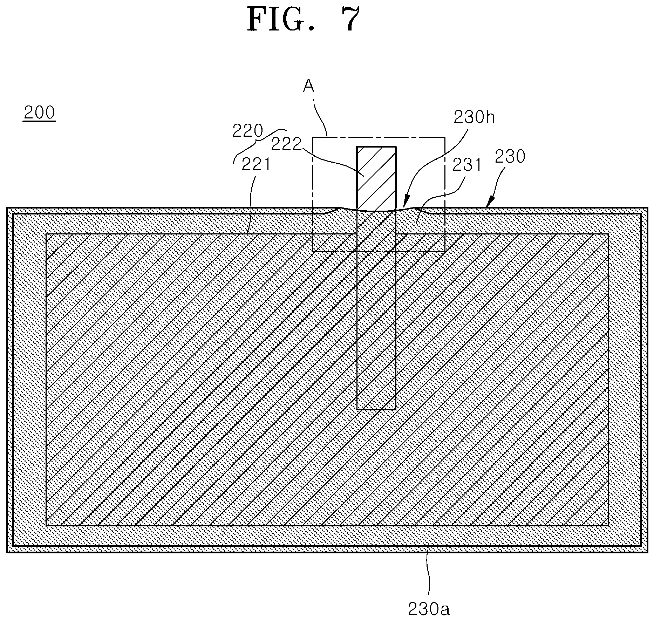

FIG. 7 is a view illustrating an example in which a second electrode is inserted into a pouch-shaped separator according to an example embodiment of the present disclosure.

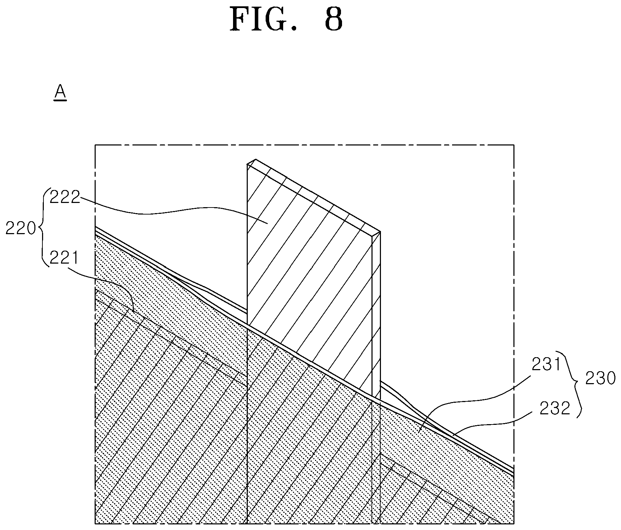

FIG. 8 is an enlarged perspective view of the portion labeled "A" in FIG. 7.

As described in FIGS. 5 and 6, the electrode assembly 200 according to an example embodiment of the present disclosure includes a pouch-shaped separator 230 in which a second electrode 220 is accommodated.

The separator 230 is formed in a pouch shape by joining the entire edge of the first separator 231 and the entire edge of the second separator 232.

As described above, the pouch-shaped separator 230 may have an entrance 230e to accommodate the second electrode 220. However, when the entrance 230e is maintained after the second electrode 220 is inserted into the separator 230, the second electrode 220 may be separated from the separator 230. **In** this case, the first electrode 210, which is adjacent to the separator 230 in which the second electrode 220 is inserted, may come into contact with the second electrode 220. **In** particular, as the charging/discharging cycle of the secondary battery 100 increases, the probability of such a problem increases when the separator 230 shrinks.

Therefore, the entrance 230e may be sealed to reduce or prevent a short circuit between the first electrode 210 and the second electrode 220, and further improve the safety of the secondary battery 100. For example, the entrance 230e may be transformed into the joined portion 230a when one edge of the first separator 231 and one edge of the second separator 232 are heat-sealed to each other. Accordingly, the separator 230 may be in a form in which all edges of the separator 230 are joined.

As discussed above, the second electrode 220 includes the second electrode plate 221 and the second electrode tab 222. The separator 230 may have a space for the second electrode plate 221 to be joined to the second electrode tab 222 and/or for the second electrode tab 222 to electrically connect the second electrode plate 221 to the outside.

Referring back to FIG. 7, the separator 230 includes an opening 230h formed in a portion of the pouch shape. For example, the separator 230 may have an opening 230h formed in at least a portion of the joined portion 230a. For example, as shown in FIG. 7, the separator 230 may be in a quadrangular pouch form with long and short sides. The opening 230h may be formed in the long side or in the short side. In addition, the opening 230h may be formed in the three edges that are already joined. Alternatively, the opening 230h may be formed in an edge that constitutes the entrance 230e. However, the position of the opening 230h is not limited thereto, and the opening 230h may be formed in any area where the second electrode tab 222 is expected to be joined to the second electrode plate 221. For example, the opening 230h may be formed in the surface of the first separator 231 and/or the second separator 232 rather than in the joined portion 230a.

As shown in FIGS. 7 and 8, the second electrode tab 222 is a component separated from the second electrode plate 221, and one side of the second electrode tab 222 is inserted into the separator 230 through the opening 230h and joined to the second electrode plate 221. For example, the second electrode tab 222 may be joined to the second electrode plate 221 by welding.

However, unlike FIGS. 6 to 8, the second electrode 220 may be inserted into the separator 230 after the second electrode tab 222 is attached to the second electrode plate 221. Alternatively, the second electrode 220 may form the second electrode tab 222 as the second uncoated portion is extended to the outside. In this case, the opening 230h may be formed in the entrance 230e. In addition, the opening 230h may be formed when the entrance 230e is sealed after the second electrode 220 is inserted into the separator 230.

The other side of the second electrode tab 222 passes through the opening 230h and is exposed to the outside of the pouch-shaped separator 230. For example, the other side of the second electrode tab 222 may be electrically connected to a current collector, a current collector plate, a cap plate, a cap assembly, and the like. Thus, the second electrode tab 222 may be electrically connected to the outside.

Through these structures, the separator 230 according to an example embodiment of the present disclosure is in a pouch form with improved safety by sealing all edges, and provides a method for the second electrode 220 to be electrically connected to the outside.

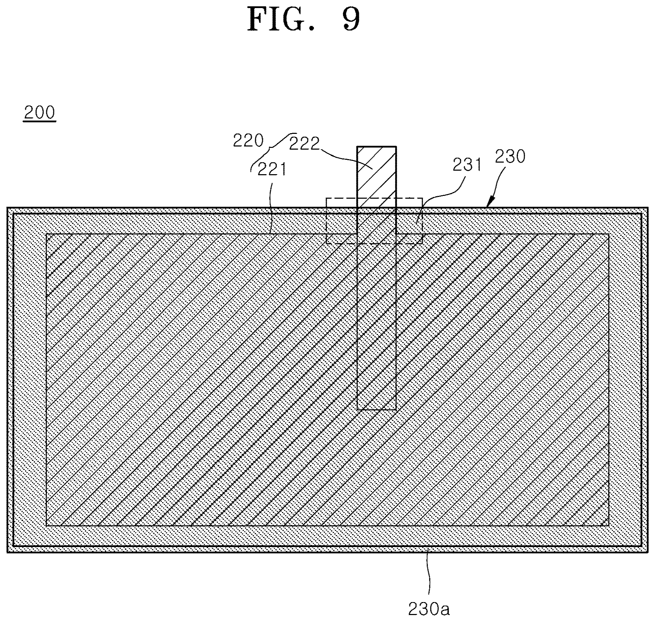

FIG. 9 is a view illustrating an example in which a second electrode is inserted into a pouch-shaped separator according to an example embodiment of the present disclosure.

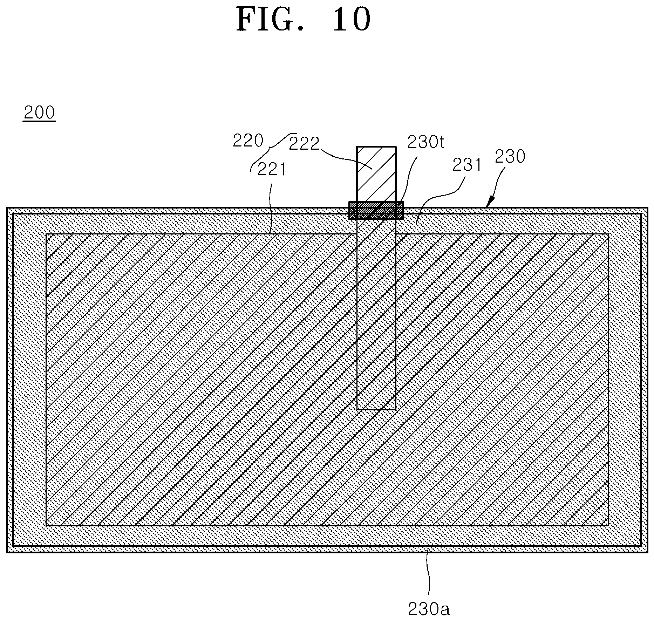

FIG. 10 is a view illustrating an example in which a second electrode is inserted into a pouch-shaped separator according to an example embodiment of the present disclosure.

As described in FIGS. 5 to 8, the electrode assembly 200 according to an example embodiment of the present disclosure includes a pouch-shaped separator 230 in which a second electrode 220 is accommodated. The separator 230 includes an opening 230h formed in a portion of the pouch shape.

Meanwhile, when the opening 230h is open, the separator 230 may be torn along the opening 230h, or the opening 230h may be expanded during the charging and discharging process. In this case, since the separator 230 cannot perform the role of a pouch, the second electrode 220 and the first electrode 210 may come into contact with each other.

To reduce or prevent this problem, the opening 230h may be sealed.

As shown in FIG. 9, for example, the opening 230h may be heat-sealed on the second electrode tab 222. For example, the opening 230h is melted and fused onto the second electrode tab 222 by heat fusion to seal the pouch-shaped separator 230.

For example, as shown in FIG. 10, the separator 230 may include a sealing tape 230t that is attached to the opening 230h and the second electrode tab 222 to seal the pouch-shaped separator 230. The sealing tape 230t may be attached to the opening 230h and to the second electrode tab 222, which is exposed through the opening 230h, to seal the opening 230h. In addition, unlike FIG. 10, the sealing tape 230t may be attached along the entrance 230e to seal the entrance 230e and the opening 230h at the same time.

The sealing tape 230t may include an insulating layer including an insulating material. For example, the insulating material may include at least one of polyimide (PI), polysulfone, polyurethane (PU), polyamide (PA), 6,6 nylon, polycarbonate (PC), polytetrafluoroethylene (PTFE), polymethyl methacrylate (PMMA), and polyethylene terephthalate (PET).

In addition, the sealing tape 230t may include an adhesive layer including an adhesive material. The adhesive layer may be located between the insulating layer and the opening 230h and/or the second electrode tab 222, and may adhere the insulating layer to the opening 230h and/or the second electrode tab 222.

For example, the adhesive material may include at least one of a silicone-based resin, an acrylic resin, a urethane-based resin, a rubber-based resin, an epoxy resin, a polyolefin, and a combination thereof.

Through these structures, the separator 230 may maintain a pouch form even when the second electrode 220 contracts or expands during charging or discharging. In addition, the separator 230 may accommodate the second electrode 220 more stably and improve the stability of the secondary battery 100.

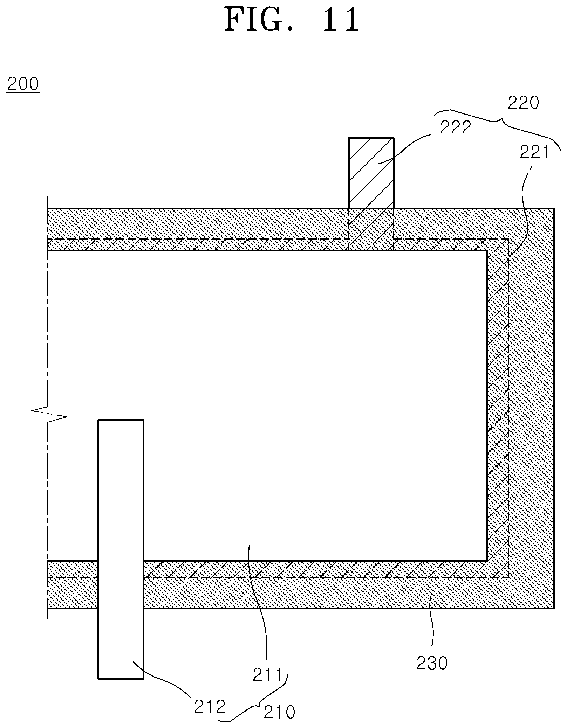

FIG. 11 is a view illustrating an electrode assembly according to an example embodiment of the present disclosure.

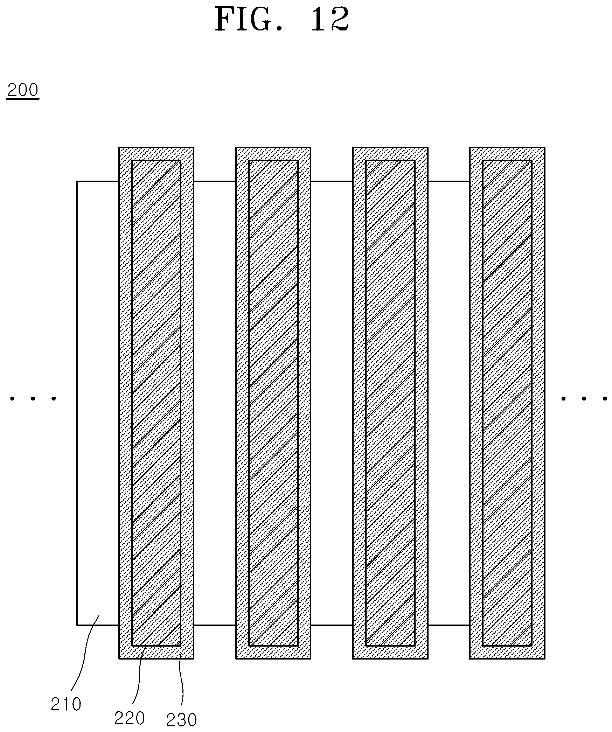

FIG. 12 is a view illustrating an electrode assembly according to an example embodiment of the present disclosure.

As described in FIGS. 5 to 10, the electrode assembly 200 according to an example embodiment of the present disclosure includes a pouch-shaped separator 230 in which a second electrode 220 is accommodated.

For example, as shown in FIG. 11, the electrode assembly 200 is formed by winding the stacked first electrode 210 and pouch-shaped separator 230 in which the second electrode 220 is accommodated. For example, the electrode assembly 200 may be or include a jelly-roll type electrode assembly.

When the electrode assembly 200 is a wound electrode assembly, the first electrode 210, the second electrode 220, and the separator 230, which are formed long in a longitudinal direction, may be aligned and wound. In order to align the first electrode 210, the second electrode 220, and the separator 230, various components such as EPC sensors and meandering correction devices may be included when they are wound.

For example, the second electrode 220 is accommodated in the pouch-shaped separator 230 according to an example embodiment of the present disclosure. In addition, the entire edge of the separator 230 is sealed, thereby reducing or preventing the second electrode 220 from being separated from the separator 230. Accordingly, the pouch-shaped separator 230 may improve the manufacturing efficiency when the electrode assembly 200 is wound, which is advantageous for forming a jelly-roll type.

In addition, as described in FIGS. 5 to 10, the pouch-shaped separator 230 may have high stability even after charging/discharging cycles are performed.

For example, as described in FIG. 1, the case 50 may have a cylindrical shape. For example, as described in FIGS. 1 and 11, the secondary battery 100 may be or include a cylindrical secondary battery including a jelly-roll type electrode assembly 200 and a case 50 accommodating the electrode assembly 200.

However, the secondary battery 100 according to an example embodiment of the present disclosure is not limited to the cylindrical secondary battery. For example, as shown in FIG. 12, the electrode assembly 200 may be formed by alternately stacking a plurality of first electrodes 210 and a plurality of separators 230 accommodating the second electrode 220. For example, the electrode assembly 200 may form a stack. In addition, the secondary battery 100 may include a prismatic and/or pouch-shaped secondary battery including a stack type electrode assembly 200.

In another example, unlike the illustrations in FIGS. 11 and 12, the pouch-shaped separator 230 may accommodate both the first electrode 210 and the second electrode 220. In this case, as described in FIG. 6, the separator 230 may include a plurality of pouches that provide separate spaces for storage. The first electrode 210 and the second electrode 220 may be alternately accommodated in each of the plurality of pouches. Through this structure, the electrode assembly 200 may form a more stable stack.

As described above, the entire edge of the separator 230 may be sealed by bonding. Accordingly, even when the electrode assembly 200 is formed as a wound jelly roll type, and/or a plurality of electrodes are stacked to form a stack type, the second electrode 220 is not separated from the separator 230.

Through these structures, an example embodiment of the present disclosure may reduce or prevent the problem of meandering in an electrode or separator when manufacturing an electrode assembly 200. In addition, an example embodiment of the present disclosure may provide an electrode assembly 200 and/or a secondary battery 100 with high stability even when operated at a high voltage.

### List of Reference Numerals:

100: Secondary battery
200: Electrode assembly
210: First electrode
220: Second electrode
230: Separator

## Claims

1. An electrode assembly (200) comprising:
one or more first electrodes (210);
one or more second electrodes (220) having a greater area than the one or more first electrodes (210); and
one or more separators (230) having a pouch shape in which the one or more second electrodes (220) are accommodated,
wherein the one or more first electrodes (210) and the one or more separators (230) in which the one or more second electrodes (220) are accommodated are stacked together.

2. The electrode assembly (200) of claim 1, wherein each of the one or more separators (230) comprise:
a first separator (231) forming one side of the pouch shape; and
a second separator (232) which edges are joined to the first separator (231) to form another side of the pouch shape.

3. The electrode assembly (200) of claim 2, wherein in each of the one or more separators (230), the entire edge of the first separator (231) and the entire edge of the second separator (232) are joined to form the pouch shape.

4. The electrode assembly (200) of any one of the preceding claims, wherein:
a first electrode (210) comprises a first electrode plate (211);
a first electrode tab (212) having one side joined to the first electrode plate (211) and the other side extending outside the first electrode plate (211), and a second electrode (220) includes a second electrode plate (221); and
a second electrode tab (222) having one side joined to the second electrode plate (221) and the other side extending outside the second electrode plate (221).

5. The electrode assembly (200) of claim 4, wherein:
the separator (230) comprises an opening (230h) formed in a portion (230a) of the pouch shape, and
the other side of the second electrode tab (222) passes through the opening (230h) and is exposed to the outside of the separator (230).

6. The electrode assembly (200) of claim 5, wherein the opening (230h) is heat-sealed on the second electrode tab (222) to seal the pouch-shaped separator (230).

7. The electrode assembly (200) of claim 5, wherein the separator (230) comprises a sealing tape (230t) attached to the opening (230h) and the second electrode tab (222) to seal the pouch-shaped separator (230).

8. The electrode assembly (200) of any one of the preceding claims, wherein the stacked first electrode (210) and the pouch-shaped separator (230) in which the second electrode (220) is accommodated are wound to form the electrode assembly (200).

9. The electrode assembly (200) of any one of the preceding claims, wherein the second electrode (220) comprises a negative electrode.

10. A secondary battery (100) comprising:
an electrode assembly (200); and
a case (50) accommodating the electrode assembly (200),
wherein the electrode assembly (200) comprises:
one or more first electrodes (210);
one or more second electrodes (220) having a greater area than the first electrode (210); and
one or more separators (230) having a pouch shape in which the second electrode (220) is accommodated, and the first electrode (210) and the separator (230) in which the second electrode (220) is accommodated are stacked together.

11. The secondary battery (100) of claim 10, wherein each of the one or more separators (230) comprise:
a first separator (231) forming one side of the pouch shape; and
a second separator (232) which entire edge is joined to the first separator (231) to form another side of the pouch shape.

12. The secondary battery (100) of claim 10 or 11, wherein:
a first electrode (210) includes a first electrode plate (211);
a first electrode tab (212) having one side joined to the first electrode plate (211) and the other side extending outside the first electrode plate (211), and a second electrode (220) includes a second electrode plate (221); and
a second electrode tab (222) having one side joined to the second electrode plate (221) and the other side extending outside the second electrode plate (221).

13. The secondary battery (100) of claim 12, wherein:
the separator (230) includes an opening (230h) formed in a portion (230a) of the pouch shape, and
the other side of the second electrode tab (222) passes through the opening (230h) and is exposed to the outside of the separator (230).

14. The secondary battery (100) of claim 13, wherein the opening (230h) is heat-sealed on the second electrode tab (222) to seal the pouch-shaped separator (230).

15. The secondary battery (100) of any one of the claims 10 to 14, wherein:
the stacked first electrode (210) and the pouch-shaped separator (230) in which the second electrode (220) is accommodated are wound to form the electrode assembly (200), and
the case (50) has a cylindrical shape to accommodate the wound electrode assembly.
